# EUROPÄISCHE PATENTSCHRIFT

(11) **EP 2 512 819 B1**
(45) Veröffentlichungstag und Bekanntmachung des Hinweises auf die Patenterteilung: **15.05.2019**
(21) Anmeldenummer: 10795236.8
(22) Anmeldetag: 10.12.2010
(51) Int. Cl.: B42D 15/00, D21H 21/40, G02B 5/28

(54) **GOLDFARBENES DÜNNSCHICHTELEMENT MIT MEHRSCHICHTSTRUKTUR**
MULTILAYER THIN FILM ELEMENT HAVING A GOLD TONE
ELÉMENT COUCHE MINCE MULTICOUCHE DE COULEUR D'OR

(30) Priorität: 14.12.2009 DE 102009058243
(43) Veröffentlichungstag der Anmeldung: 24.10.2012
(73) Patentinhaber: Giesecke+Devrient Currency Technology GmbH, 81677 München (DE)
(72) Erfinder: LOCHBIHLER, Hans, 80333 München (DE)
(86) Internationale Anmeldenummer: PCT/EP2010/007546
(87) Internationale Veröffentlichungsnummer: WO 2011/082761

(56) Entgegenhaltungen:
- WO-A1-03/070482
- DE-A1-102004 063 433
- US-A- 6 031 653
- US-A1- 2009 069 447
- US-B2- 6 656 259

## Beschreibung

Die Erfindung betrifft ein Dünnschichtelement mit Mehrschichtstruktur für Sicherheitspapiere, Wertdokumente und dergleichen, das bei der Betrachtung im Auflicht goldfarben erscheint und das zumindest zwei semitransparente, d.h. teiltransparente, Spiegelschichten und zumindest eine zwischen den zumindest zwei Spiegelschichten angeordnete dielektrische Abstandsschicht aufweist. Die Erfindung betrifft ferner ein Durchsichtssicherheitselement und einen Datenträger mit einem solchen Dünnschichtelement.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Seit einigen Jahren haben sich Durchsichtsfenster als attraktive Sicherheitselemente in Polymer- und neuerdings auch in Papier-Banknoten erwiesen, da sie den Einsatz einer Vielzahl von Sicherheitsmerkmalen gestatten.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen.

In diesem Zusammenhang ist bekannt, Sicherheitselemente mit mehrschichtigen Dünnschichtelementen einzusetzen, deren Farbeindruck sich für den Betrachter mit dem Betrachtungswinkel ändert, und beim Kippen des Dünnschichtelements beispielsweise von Grün nach Blau, von Blau nach Magenta oder von Magenta nach Grün wechselt. Das Auftreten derartiger Farbänderungen beim Verkippen eines Dünnschichtelements wird im Folgenden als Farbkippeffekt bezeichnet.

US 6,656,259 B2 offenbart mehrschichtige Interferenzpigmente, welche plättchenförmige Substrate aus Siliziumdioxid umfasst, welches alternierend mit zwei oder mehr Schichten aus lichttransparenten Materialien mit einem Brechungsindex von n > 1,8 und dazwischen ein oder mehrere Schichten lichttransparenten Materialien mit einem Brechungsindex von n ≤ 1,8, wobei die optische Dichte der plättchenförmigen Substrate und der individuellen Schichten des lichttransparenten Materialien mit einem Brechungsindex von n ≤ 1,8 im Wesentlichen gleich ist.
DE 10 2004 063433 A1 offenbart ein mehrschichtiges PVD-Effektpigment, wobei das mehrschichtige PVD-Effektpigment folgende Schichtenfolge umfasst: a) Dielektrikumschicht mit einer geometrischen Dicke von 25 nm bis weniger als 200 nm, b) zentrale, metallische Absorberschicht mit einer geometrischen Dicke von weniger als 40 nm, c) Dielektrikumschicht mit einer geometrischen Dicke von 25 nm bis weniger als 200 nm, wobei die Schichten unmittelbar aufeinander folgen und die Dielektrikumschichten a) und c) gleich sind.
WO 03/070482 A1 offenbart ein Sicherheitselement zu Einlagerung in oder Applikation auf einem Sicherheitsdokument derart, dass es von beiden Seiten des Sicherheitsdokuments aus visuell erkennbar ist, ist mehrschichtig aufgebaut und umfasst ein Interferenzelement mit Farbkippeffekt sowie Beugungsstrukturen. Je nach Anordnung der Schichten und der vorhandenen Beugungsstrukturen auf einem transparenten Substrat sind der Farbkippeffekt und/oder die beugungsoptischen Effekte von einer oder beiden Seiten des Sicherheitselements wahrnehmbar.

Eine weitere besondere Rolle bei der Echtheitsabsicherung spielen Durchsichtssicherheitselemente, die einen Kontrast zwischen ihrem Erscheinungsbild in Aufsicht und in Durchlicht zeigen.

Aus der DE 10 2005 021 514 A1 ist ein Sicherheitselement für ein Wertdokument bekannt, das eine münzmetallfarbene Beschichtung aufweist. Die münzmetallfarbene Beschichtung enthält eine Schichtenfolge mit einer Reflektorschicht, einer dielektrischen Abstandsschicht und einer dünnen Metallschicht. Gemäß einer bevorzugten Ausgestaltung ist die Beschichtung des Sicherheitselements goldfarben und die Metallschicht besteht im Wesentlichen aus Gold.

Ausgehend davon liegt der Erfindung die Aufgabe zugrunde, ein kostengünstiges Sicherheitselement bereitzustellen, das ein attraktives visuelles Erscheinungsbild und eine hohe Fälschungssicherheit aufweist.

Diese Aufgabe wird durch das Durchsichtssicherheitselement und den Datenträger gemäß den unabhängigen Ansprüchen gelöst. Weiterbildungen der Erfindung sind Gegenstand der Unteransprüche.

Das Dünnschichtelement des Durchsichtssicherheitselements gemäß der vorliegenden Erfindung kann ohne Verwendung von Gold hergestellt werden. Bei dem Dünnschichtelement ist der goldfarbene visuelle Eindruck nahezu unabhängig vom Betrachtungswinkel. Anhand der vorliegenden Offenbarung wird weiterhin gezeigt, wie sich das goldfarbene Dünnschichtelement in Mikrostrukturen integrieren lässt. Damit lassen sich beispielsweise goldfarbene Motive bei Mikrolinsen-Vergrößerungsanordnungen erzeugen.

Ein Aspekt der Erfindung betrifft ein Durchsichtssicherheitselement für Sicherheitspapiere, Wertdokumente und dergleichen, mit einem Träger und einem auf dem Träger aufgebrachten Dünnschichtelement, wobei das Dünnschichtelement das vorstehend erwähnte Dünnschichtelement ist. Das Dünnschichtelement mit Mehrschichtstruktur erscheint bei der Betrachtung im Auflicht goldfarben, bei der Betrachtung im Durchlicht blau und weist für den Betrachter keinen Farbkippeffekt aufweist, und das zumindest zwei semitransparente Spiegelschichten und eine zwischen den zumindest zwei Spiegelschichten angeordnete dielektrische Abstandsschicht aufweist, so dass sich bei Messung der Transmission von unpolarisiertem Licht im blauen Wellenlängenbereich von 420 bis 490 nm eine Resonanz mit einer Halbwertsbreite von 70 bis 150 nm zeigt.

Die zumindest zwei semitransparenten Spiegelschichten müssen nicht notwendigerweise durch einen homogenen, geschlossenen Film gebildet sein. Sie können ebenso durch Cluster, d.h. ein Film mit Unterbrechungen, gebildet sein. Der optische Effekt der Fabry-Perot-Resonanz tritt auch für diesen Fall auf und erzeugt für den Betrachter eine Goldfarbe.

Vorzugsweise ist die sich bei Messung der Transmission von unpolarisiertem Licht im blauen Wellenlängenbereich von 420 bis 490 nm zeigende Resonanz mit einer Halbwertsbreite von 70 bis 150 nm die einzige Resonanz im sichtbaren Bereich.

Die beiden Spiegelschichten sind beispielsweise aus Silber oder einer Silber-Legierung gebildet, wobei die dielektrische Abstandsschicht mit einer Dicke h und einem Brechungsindex v die Relation 120 nm < h*v <170 nm erfüllt. Diese dielektrische Schicht besteht bevorzugt aus einem homogenen Medium, z.B. SiO2. Sie kann aber auch aus einem inhomogenen Medium bestehen, z.B. SiO2 mit darin eingebetteten Nanopartikeln (die z.B aus Latex sind). In diesem Fall wird v durch den effektiven bzw. mittleren Brechungsindex charakterisiert. Das Material der Abstandsschicht ist vorzugsweise SiO2.

Die beiden Spiegelschichten können alternativ aus Silber oder einer Silber-Legierung gebildet sein, wobei die dielektrische Abstandsschicht mit einer Dicke h und einem Brechungsindex v die Relation 340 nm < h*v <400 nm erfüllt. Hierbei ist die dielektrische Abstandsschicht vorzugsweise aus SiO2 gebildet. Sie kann aber auch aus einem inhomogenen Medium bestehen, z.B. SiO2 mit darin eingebetteten Nanopartikeln (die z.B aus Latex sind). Weiter bevorzugt ist innerhalb der dielektrischen Abstandsschicht eine aus Kupfer gebildete halbtransparente Schicht eingebracht.

Die beiden Spiegelschichten können alternativ aus Aluminium oder einer Aluminium-Legierung gebildet sein, wobei die dielektrische Abstandsschicht mit einer Dicke h und einem Brechungsindex v die Relation 120 nm < h*v <190 nm erfüllt. Hierbei ist die dielektrische Abstandsschicht vorzugsweise aus SiO2 gebildet. Sie kann aber auch aus einem inhomogenen Medium bestehen, z.B. SiO2 mit darin eingebetteten Nanopartikeln (die z.B aus Latex sind).

Die beiden Spiegelschichten können alternativ aus ZnS oder TiO2 gebildet sein, wobei die dielektrische Abstandsschicht mit einer Dicke h und einem Brechungsindex v die Relation 100 nm < h*v <170 nm erfüllt und v kleiner als der Brechungsindex der Spiegelschicht ist. Hierbei ist die dielektrische Abstandsschicht vorzugsweise aus SiO2 gebildet. Sie kann aber auch aus einem inhomogenen Medium bestehen, z.B. SiO2 mit darin eingebetteten Nanopartikeln (die z.B aus Latex sind).

Die beiden Spiegelschichten können alternativ aus einem Halbmetall gebildet sein, z.B. Silizium oder Germanium. Im Falle von Silizium haben diese Schichten vorzugsweise jeweils eine Dicke von 10 nm bis 35 nm. Hierbei ist die dielektrische Abstandsschicht vorzugsweise aus SiO2 gebildet. Sie kann aber auch aus einem inhomogenen Medium bestehen, z.B. SiO2 mit darin eingebetteten Nanopartikeln (die z.B aus Latex sind).

Das Dünnschichtelement erscheint mit Vorteil im Durch-licht blau und weist nahezu keinen Farbkippeffekt auf.

Das Dünnschichtelement liegt vorzugsweise in Form von Mustern, Zeichen oder einer Codierung vor.

Das Dünnschichtelement ist vorzugsweise mit einer Reliefstruktur kombiniert. Insbesondere wird bevorzugt, dass das Dünnschichtelement auf einer diffraktiven Reliefstruktur, einer mikrooptischen Reliefstruktur oder Sublambda-Strukturen aufgebracht ist.

Ein weiterer Aspekt der Erfindung betrifft einen Datenträger mit dem vorstehend erwähnten Durchsichtssicherheitselement, wobei das Dünnschichtelement in
oder über einem transparenten Fensterbereich oder einer durchgehenden Öffnung des Datenträgers angeordnet ist.

Der Datenträger ist vorzugsweise ein Wertdokument, wie eine Banknote, insbesondere eine Papierbanknote, eine Polymerbanknote, eine Folienverbundbanknote oder Ausweiskarte.

Der Erfindung liegt die Erkenntnis zugrunde, dass bei einem Fabry-Perot-Resonator, der zwei semitransparente Spiegelschichten und eine dazwischen angeordnete dielektrische Abstandsschicht aufweist, sowohl bei der Betrachtung im Auflicht, als auch bei der Betrachtung in Durchlicht eine ausgeprägte Farbsättigung erzielt werden kann, wenn die Mehrschichtstruktur so beschaffen ist, dass sich bei Messung der Transmission von unpolarisiertem Licht im blauen Wellenlängenbereich von 420 bis 490 nm eine Resonanz mit einer Halbwertsbreite von 70 bis 150 nm zeigt. Mit der Formulierung "eine Resonanz mit einer Halbwertsbreite von 70 bis 150 nm innerhalb des blauen Wellenlängenbereiches von 420 bis 490 nm" ist gemeint, dass sich das Maximum der Resonanz innerhalb des blauen Wellenlängenbereiches von 420 bis 490 nm befindet.

Die Resonanzeigenschaften sowie die Farbe des Dünnschichtelements bei der Betrachtung im Auflicht und im Durchlicht können durch die Wahl der Abstandssicht, d.h. die Dicke und den Brechungsindex der Abstandsschicht, und durch die Wahl der semitransparenten Spiegelschichten bestimmt werden.

Das Dünnschichtelement weist bei der Betrachtung im Auflicht eine Goldfarbe auf. Bei der Betrachtung im Durchlicht ergibt sich ein blauer Farbton, der nahezu keinen Farbkippeffekt aufweist.

Das Dünnschichtelement ist vorzugsweise so beschaffen, dass sich bei Messung der Transmission von unpolarisiertem Licht im sichtbaren Bereich nur eine einzige Resonanz mit einer Halbwertsbreite von 70 bis 150 nm zeigt.

Weiter bevorzugt ist das Dünnschichtelement so beschaffen, dass sich bei Messung der Transmission von unpolarisiertem Licht im sichtbaren Bereich nur eine einzige Resonanz mit einer Halbwertsbreite von 90 bis 120 nm zeigt. Sowohl bei der Betrachtung im Auflicht, als auch bei der Betrachtung im Durchlicht ist dann die Farbsättigung besonders ausgeprägt.

In einer vorteilhaften Erfindungsvariante sind die beiden Spiegelschichten aus Silber oder einer Silber-Legierung gebildet und die dielektrische Abstandsschicht mit einer Dicke h und einem Brechungsindex v erfüllt die Relation 120 nm < h*v <170 nm. In einer alternativen vorteilhaften Erfindungsvariante sind die beiden Spiegelschichten aus Silber oder einer Silber-Legierung gebildet und die dielektrische Abstandsschicht mit einer Dicke h und einem Brechungsindex v erfüllt die Relation 340 nm < h*v <400 nm. Weiter wird bevorzugt, dass die beiden semitransparenten Spiegelschichten aus Silber (Ag) oder einer Silber-Legierung gebildet sind und die dielektrische Abstandsschicht aus SiO2 gebildet ist. Insbesondere wird bevorzugt, dass die beiden semitransparenten Spiegelschichten aus Silber (Ag) oder einer Silber-Legierung gebildet sind, die dielektrische Abstandsschicht aus SiO2 gebildet ist und innerhalb der dielektrischen Abstandsschicht eine aus Kupfer gebildete halbtransparente Schicht eingebracht ist.

In einer weiteren vorteilhaften Erfindungsvariante sind die beiden semitransparenten Spiegelschichten aus Aluminium (A1) oder einer Aluminium-Legierung gebildet und die dielektrische Abstandsschicht mit einer Dicke h und einem Brechungsindex v erfüllt die Relation 120 nm < h*v <190 nm. Die dielektrische Abstandsschicht ist vorzugsweise aus SiO2 gebildet.

In einer weiteren vorteilhaften Erfindungsvariante sind die beiden Spiegelschichten aus einem hochbrechenden dielektrischen Material, insbesondere aus ZnS oder TiO2, gebildet und die dielektrische Abstandsschicht mit einer Dicke h und einem Brechungsindex v erfüllt die Relation 100 nm < h*v <170 nm, wobei v kleiner als der Brechungsindex der Spiegelschicht ist. Insbesondere wird bevorzugt, dass die beiden semitransparenten Spiegelschichten aus Zinksulfid (ZnS) oder Titandioxid (TiO2) gebildet sind und die dielektrische Abstandsschicht aus SiO2 gebildet ist.

In einer weiteren vorteilhaften Erfindungsvariante sind die beiden Spiegelschichten aus einem Halbmetall, insbesondere aus Silizium oder Germanium, gebildet. Im Falle von Silizium beträgt die Dicke der Spiegelschichten vorzugsweise jeweils 10 nm bis 35 nm. Insbesondere wird bevorzugt, dass die beiden semitransparenten Spiegelschichten aus Silizium gebildet sind und die dielektrische Abstandsschicht aus SiO2 gebildet ist.

Die Mehrschichtstruktur des Dünnschichtelements weist einen symmetrischen Dreischichtaufbau auf, mit einer ersten semitransparenten Spiegelschicht, einer dielektrischen Abstandsschicht und einer zweiten semitransparenten Spiegelschicht, die aus demselben Material wie die erste Spiegelschicht besteht und dieselbe Schichtdicke, oder nahezu dieselbe Schichtdicke, wie die erste Spiegelschicht aufweist.

Das Dünnschichtelement, das bei der Betrachtung im Auflicht goldfarben erscheint, weist mit Vorteil einen symmetrischen Drei-schichtaufbau auf, der von den folgenden Schichtfolgen gewählt ist:
5 bis 15 nm Al / 85 bis 125 nm SiO2 / 5 bis 15 nm Al;
15 bis 25 nm Ag / 80 bis 105 nm SiO2 / 15 bis 25 nm Ag;
65 bis 75 nm ZnS / 70 bis 100 nm SiO2 / 65 bis 75 nm ZnS.

Des Weiteren weist das Dünnschichtelement, das bei der Betrachtung im Auflicht goldfarben erscheint, mit Vorteil einen symmetri-schen Dreischichtaufbau auf, der von den beiden folgenden Schichtfolgen gewählt ist:
10 bis 35 nm Silizium / 140 bis 180 nm SiO2 / 10 bis 35 nm Silizium;
10 bis 35 nm Silizium / 90 bis 130 nm SiO2 / 10 bis 35 nm Silizium.
Der letztere Dreischichtaufbau zeigt auch für flache Einfallswinkel (z.B. >60°) nahezu keine Veränderung im Farbton.

Untersuchungen der Farbigkeit anhand von Dünnschichtelementen mit dielektrischen Abstandsschichten unterschiedlicher Schichtdicke haben ergeben, dass der Farbraum periodisch durchlaufen wird. Das Dünnschichtelement weist daher nicht nur mit Vorteil einen symmetri-schen Dreischichtaufbau mit der Schichtfolge 15 bis 25 nm Ag / 80 bis 105 nm SiO2 / 15 bis 25 nm Ag auf, sondern weist mit Vorteil einen symmetri-schen Dreischichtaufbau auf, der von den folgenden Schichtfolgen gewählt ist:
15 bis 25 nm Ag / 220 bis 260 nm SiO2 / 15 bis 25 nm Ag;
15 bis 25 nm Ag / 420 bis 460 nm SiO2 / 15 bis 25 nm Ag.
Jedoch wird ein Dünnschichtelement mit einem Dreischichtaufbau mit der Schichtfolge 15 bis 25 nm Ag / 80 bis 105 nm SiO2 / 15 bis 25 nm Ag bevorzugt, weil diese Variante besonders farbgetreu ist.

Das Dünnschichtelement kann insbesondere einen symmetrischen Dreischichtaufbau aufweisen, der von den folgenden Schichtfolgen gewählt ist:
10 nm Al / 120 nm SiO2 / 10 nm Al;
20 nm Ag / 90 nm SiO2 / 20 nm Ag;
70 nm ZnS / 80 nm SiO2 / 70 nm ZnS;
20 nm Ag / 240 nm SiO2 / 20 nm Ag;
20 nm Ag / 440 nm SiO2 / 20 nm Ag.

Des Weiteren kann das Dünnschichtelement insbesondere einen symmetrischen Dreischichtaufbau aufweisen, der von den beiden folgenden Schichtfolgen gewählt ist:
15 nm Silizium / 160 nm SiO2 / 15 nm Silizium;
15 nm Silizium / 110 nm SiO2 / 15 nm Silizium.
Der letztere Dreischichtaufbau zeigt auch für flache Einfallswinkel (z.B. >60°) nahezu keine Veränderung im Farbton.

Die Dünnschichtelemente können durch thermisches Verdampfen, Elektronenstrahlverdampfen (ESV) oder Sputtern hergestellt werden.

In vorteilhaften Gestaltungen liegt das Dünnschichtelement in Form von Mustern, Zeichen oder einer Codierung vor. Diese schließt auch die Möglichkeit ein, dass ein vollflächiges Dünnschichtelement mit Aussparungen in Form von Mustern, Zeichen oder einer Codierung versehen ist.

Das Dünnschichtelement kann mit Vorteil mit einer Reliefstruktur, wie etwa einer diffraktiven Reliefstruktur (z.B. Hologramm), einer mikrooptischen Reliefstruktur (z.B. Mikrolinsenstruktur, 3D-Darstellung aus Sägezahnstrukturen) oder einer Sublambda-Struktur (z.B. Subwellenlängengitter, Mottenaugenstrukturen) kombiniert sein und kann insbesondere auf eine derartige Reliefstruktur aufgebracht sein.

Das Dünnschichtelement kann auch mit optisch variablen Beschichtungen kombiniert werden, insbesondere mit Beschichtungen, die selbst eine Kombination von farbvariablen und farbkonstanten Bereichen aufweisen.

Die Erfindung betrifft auch das Durchsichtssicherheitselement für Sicherheitspapiere, Wertdokumente und dergleichen, mit einem Träger und einem auf dem Träger aufgebrachten Dünnschichtelement der beschriebenen Art. Der Träger kann einen strahlungshärtenden Lack (beispielsweise ein UV-Lack) aufweisen. Der Lack kann auf einer transparenten Trägerfolie (beispielsweise einer PET-Folie) vorliegen. Insbesondere kann der Träger ein UV-härtendes anorganisch-organisches Hybridpolymer umfassen, das beispielsweise unter dem Markennamen "Ormocer" vertrieben wird.

Die Erfindung betrifft auch einen Datenträger mit einem Durchsichtssicherheitselement der beschriebenen Art, wobei das Dünnschichtelement insbesondere in oder über einem transparenten Fensterbereich oder einer durchgehenden Öffnung des Datenträgers angeordnet ist. Bei dem Datenträger kann es sich insbesondere um ein Wertdokument, wie eine Banknote, insbesondere eine Papierbanknote, eine Polymerbanknote oder eine Folienverbundbanknote handeln, oder um eine Ausweiskarte, wie etwa eine Kreditkarte, Bankkarte, Barzahlungskarte, Berechtigungskarte, einen Personalausweis oder eine Passpersonalisierungsseite handeln.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:
- Fig. 1: ein Dünnschichtelement, das von einer mikrooptischen Reliefstruktur umgeben ist;
- Fig. 2: eine schematische Darstellung einer Banknote mit einem erfindungsgemäßen Durchsichtssicherheitselement;
- Fig. 3: das Durchsichtssicherheitselement der Fig. 1 entlang der Linie II-II im Querschnitt;
- Fig. 4: die Reflexion als Funktion des Einfallswinkels Θ =0° - 60° in einer CIE-Normfarbtafel für die Schichten (661) Au; (662) 10 nm Al, 120 nm SiO₂, 10 nm Al; (664) 20 nm Ag, 90 nm SiO₂, 20 nm Ag; und (665) 70 nm ZnS, 80 nm SiO₂, 100 nm ZnS;
- Fig. 5: die Transmission als Funktion des Einfallswinkels Θ =0° - 60° in einer CIE-Normfarbtafel für die Schichtaufbauten (662) 10 nm Al, 120 nm SiO₂, 10 nm Al; (664) 20 nm Ag, 90 nm SiO₂, 20 nm Ag; und (665) 70 nm ZnS, 80 nm SiO₂, 100 nm ZnS;
- Fig. 6: Reflexions-, Transmissions- und Absorptionsspektren eines symmetrischen Absorber/ Dielektrikum/ Absorber-Aufbaus mit der Schichtfolge 20 nm Ag, 90 nm SiO₂, 20 nm Ag für verschiedene Einfallswinkel Θ zwischen 0 und 60°;
- Fig. 7: Reflexions-, Transmissions- und Absorptionsspektren eines symmetrischen Absorber/Dielektrikum/ Absorber-Aufbaus mit der Schichtfolge Ag, 90 nm SiO₂, Ag für einen Einfallswinkel Θ = 30°, wobei die Dicke der beiden Ag-Schichten zwischen 5, 10, 15, 20 und 25 nm variiert wurde;
- Fig. 8: ein Durchsichtssicherheitselement nach einem Ausführungsbeispiel der Erfindung, bei dem das Dünnschichtelement mit einer Hologrammprägestruktur kombiniert ist.

Die Erfindung wird nun am Beispiel von Sicherheitselementen für Banknoten erläutert.

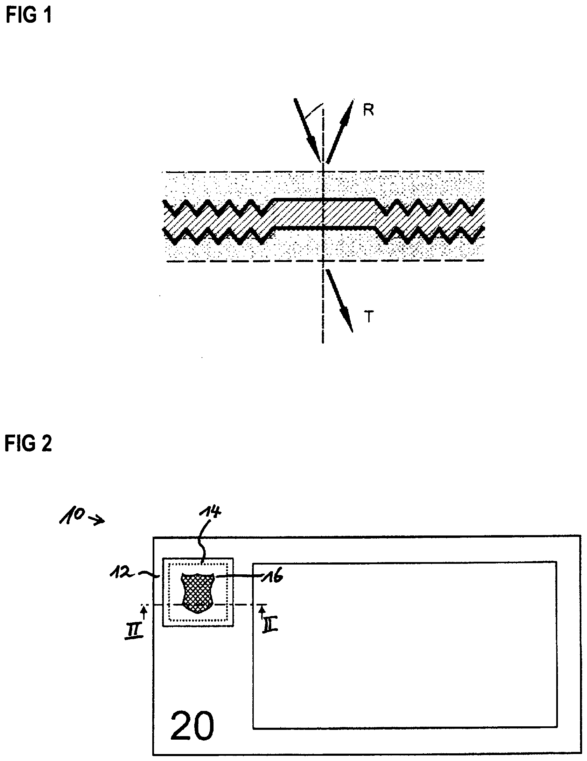

Fig. 1 zeigt ein erfindungsgemäßes Dünnschichtelement, das von einer mikrooptischen Reliefstruktur umgeben ist. Die Herstellung dieses mikrooptischen Elementes kann folgendermaßen erfolgen:
Eine nanostrukturierte Substratoberfläche (ein Reliefgitter bzw. ein aperiodisches Relief wie z.B. eine Mottenaugenstruktur) wird mit Photolack überzogen, so dass eine ebene Oberfläche entsteht. Anschließend werden in einem photolithographischen Prozess (z.B. mit Hilfe eines Laser-Writers) vordefinierte Bereiche belichtet. Nach Entfernen des belichteten Photolacks wird die Nanostruktur teilweise freigelegt. Die unbelichteten Bereiche bilden dagegen ebene Flächen, entsprechend dem mittleren Bereich des Elements von Fig. 1. Schließlich wird das Dünnschichtelement gemäß den obigen Ausführungen bedampft und mit Vorteil mit einer Lackschicht oder einer Deckfolie zukaschiert. Dieses Dünnschichtelement zeigt in den ebenen Bereichen eine Goldfarbe. Die reliefförmigen Bereiche erscheinen dagegen in einer anderen Farbe oder diese Bereiche sind schwarz absorbierend.

In Fig. 1 bezeichnet "R" die Reflexion, d.h. den reflektierten Teil des einfallenden Lichtes, und "T" die Transmission, d.h. den durchgelassenen Teil des einfallenden Lichtes.

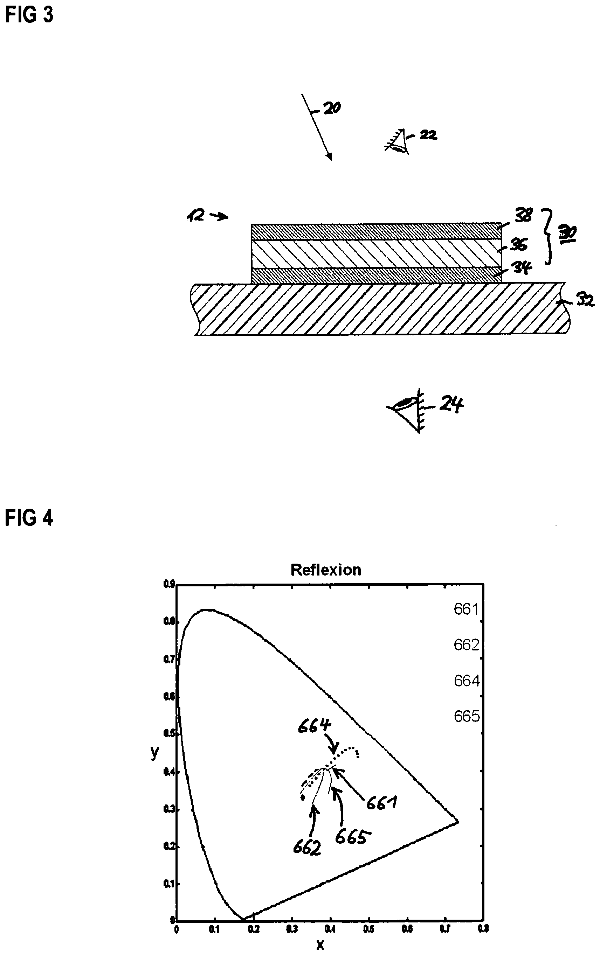

Fig. 2 zeigt dazu eine schematische Darstellung einer Banknote 10 mit einer durchgehenden Öffnung 14, die mit einem erfindungsgemäßen Durchsichtssicherheitselement 12 abgedeckt ist. Fig. 3 zeigt das Durchsichtssicherheitselement 12 entlang der Linie II-II von Fig. 2 im Querschnitt.

Das Durchsichtssicherheitselement 12 enthält ein Motiv 16, das in Fig. 2 zur Illustration als Wappenmotiv 16 dargestellt ist. In anderen Gestaltungen kann das Motiv 16 jedoch beliebige Muster, Zeichen oder Codierungen, insbesondere auch eine alphanumerische Zeichenfolge, wie etwa die Denomination der Banknote 10, darstellen. Bei einer Betrachtung des Durchsichtssicherheitselements im Auflicht, bei der sich der Betrachter 22 auf derselben Seite wie das einfallende Licht 20 befindet, erzeugt das Motiv 16 einen goldfarbenen visuellen Eindruck.

Wird das Durchsichtssicherheitselement 12 dagegen im Durchlicht betrachtet (Betrachtungsposition 24), etwa indem die Banknote 10 vor eine Lichtquelle oder gegen das Tageslicht gehalten wird, so erscheint das Motiv 16 für den Betrachter 24 mit einer kräftigen, blauen Farbe, die sich mit dem Kippwinkel der Banknote 10 kaum verändert.

Der satte und kräftige blaue Farbeindruck in Durchsicht eines im Auflicht goldfarben erscheinenden Sicherheitselements widerspricht den üblichen Sehgewohnheiten und hat daher einen hohen Aufmerksamkeits- und Wiedererkennungswert.

Fig. 4 zeigt in einer CIE-Normfarbtafel die Reflexion als Funktion des Einfallswinkels Θ =0° - 60° für die Schichten: (661) Au; (662) 10 nm Al, 120 nm SiO₂, 10 nm Al; (664) 20 nm Ag, 90 nm SiO₂, 20 nm Ag; und (665) 70 nm ZnS, 80 nm SiO₂, 100 nm ZnS. Der schwarze Fleck bezeichnet den Weißpunkt. Für die Berechnung der Farbwerte wurden die optischen Konstanten aus der Standard-Literatur verwendet. Bei experimentell hergestellten dünnen Schichten könnten die Brechungsindizes jedoch - bedingt durch das Herstellungsverfahren - ein wenig von diesen Werten abweichen. Um die maximale Sättigung im Goldfarbton zu erzielen, sollte die Dicke der dielektrischen Abstandschicht innerhalb der oben angegebenen Toleranzen angepasst werden.

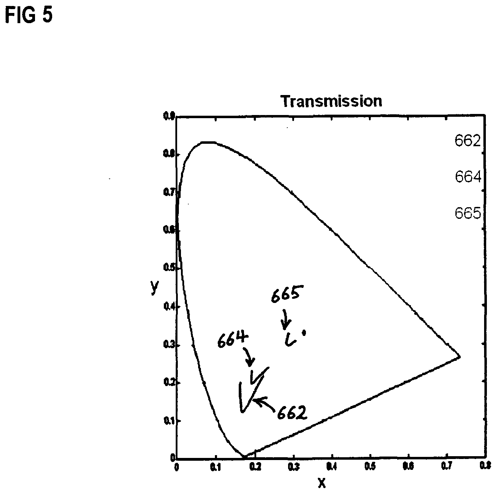

Fig. 5 zeigt in einer CIE-Normfarbtafel die Transmission als Funktion des Einfallswinkels Θ =0° - 60° im Farbdiagramm für die Schichtaufbauten (662) 10 nm Al, 120 nm SiO₂, 10 nm Al, (664) 20 nm Ag, 90 nm SiO₂, 20 nm Ag und (665) 70 nm ZnS, 80 nm SiO₂, 100 nm ZnS. Der schwarze Fleck bezeichnet den Weißpunkt. Wie in Fig. 4 wurden zur Berechnung der Farbwerte die optischen Konstanten aus der Standard-Literatur verwendet.

Um die genannten Farbeffekte zu erzeugen, enthält das Durchsichtssicherheitselement 12 mit Bezug auf Fig. 3 eine transparente Kunststofffolie 32, auf die ein dreischichtiges, symmetrisches Dünnschichtelement 30 in Form des gewünschten Motivs 16 aufgebracht ist. Das Dünnschichtelement 30 besteht aus einer ersten semitransparenten Spiegelschicht 34, die im Ausführungsbeispiel durch eine 20 nm dicke Silberschicht gebildet ist, einer dielektrischen Abstandsschicht 36, die im Ausführungsbeispiel durch eine 90 nm dicke SiO₂-Schicht gebildet ist, und einer zweiten semitransparenten Spiegelschicht 38, die im Ausführungsbeispiel durch eine weitere 20 nm dicke Silberschicht gebildet ist.

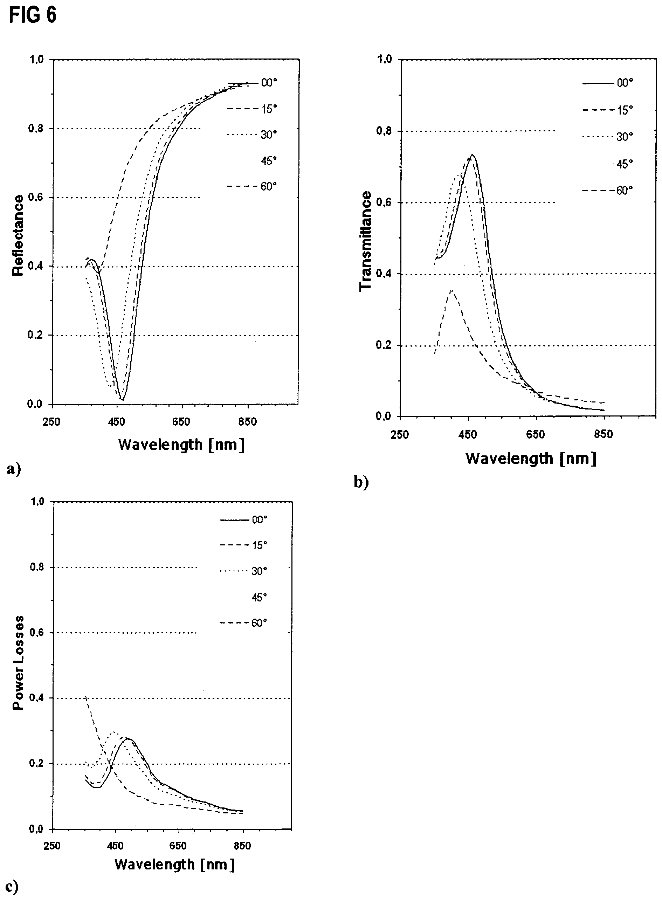

Der wesentliche Beitrag zur Farbgebung stammt von den Fabry-Perot-Resonanzen, die sich zwischen den dünnen semitransparenten Spiegelschichten ausprägen. Dieser Effekt wird anhand von Reflexions-, Transmissions- und Absorptionsspektren von unpolarisiertem Licht näher erläutert. Fig. 6 zeigt die Spektren des Dreischichtsystems 20 nm Ag, 90 nm SiO₂, 20 nm Ag für verschiedene Einfallswinkel Θ zwischen 0 und 60°. Hier ist ersichtlich, dass das Transmissionsmaximum bezogen auf den Peak in der Absorption und bezogen auf die Senke in der Reflexion für zunehmende Einfallswinkel kaum verschoben wird. Dadurch entsteht ein vom Betrachtungswinkel unabhängiger, gleichmäßiger Farbeindruck. Das Dreischichtsystem zeigt einen goldenen Farbton in Reflexion und eine blauen Farbton in Transmission.

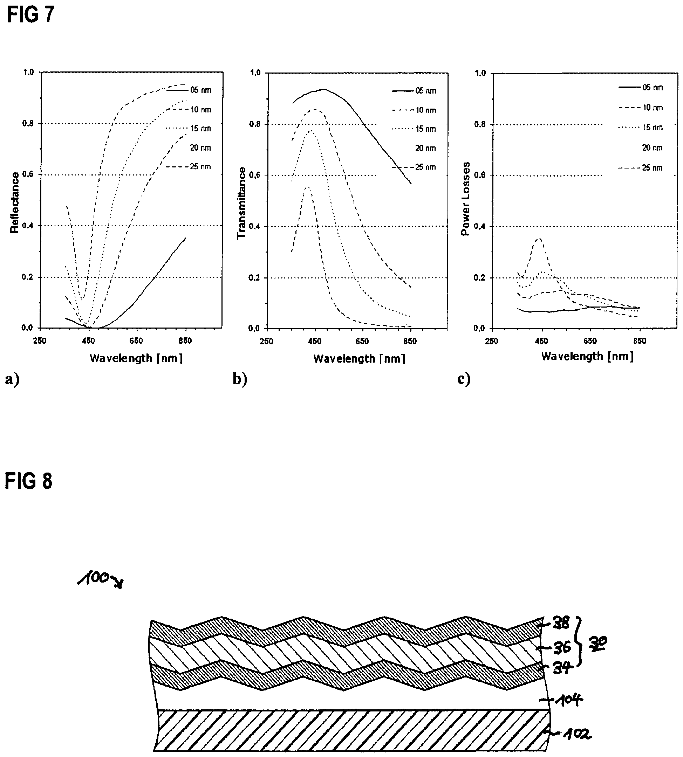

Fig. 7 zeigt eine Untersuchung des Einflusses der Dicke der semitransparenten Spiegelschichten. Gezeigt werden Reflexions-, Transmissions- und Absorptionsspektren eines symmetrischen Absorber/ Dielektrikum/ Absorber-Aufbaus mit der Schichtfolge Ag, 90 nm SiO₂, Ag für einen Einfallswinkel Θ = 30°, wobei die Dicke der beiden Ag-Schichten zwischen 5, 10, 15, 20 und 25 nm variiert wurde. Es ist offensichtlich, dass die Lage der Resonanz kaum von der Dicke der semitransparenten Spiegelschichten beeinflusst wird. Die Dicke ist jedoch indirekt proportional zur Halbwertsbreite der Resonanz. Eine Halbwertsbreite der Resonanz in einem Bereich von 70 bis 150 nm im Spektrum liefert einen optimalen Farbkontrast. Um gleichzeitig in der Reflexion eine hohe Farbintensität zu erzielen, eignet sich bei diesem Schichtaufbau besonders eine Dicke der semitransparenten Spiegelschicht von 20 nm Ag.

Das Ausführungsbeispiel der Fig. 8 zeigt ein Durchsichtssicherheitselement 100, bei dem ein erfindungsgemäßes Dünnschichtelement mit einer Hologrammprägestruktur kombiniert ist.

Dazu wurde auf ein transparentes Foliensubstrat 102 zunächst eine transparente Prägelackschicht 104 mit der gewünschten Hologramm-Prägestruktur aufgebracht. Nach dem Aufbringen einer nicht dargestellten Primerschicht wurde dann ein Dünnschichtelement mit Interferenzschichtaufbau, etwa ein Dünnschichtelement 30 der bei Fig. 3 beschriebenen Art, auf die Prägestruktur aufgedampft. Auf diese Weise lassen sich die optisch variablen Effekte der Hologramm-Prägestruktur mit dem oben beschriebenen auffälligen Reflexions- und Transmissions-Farbeffekt (d.h. dem Farbeffekt in Aufsicht und im Durchlicht) kombinieren. Beispielsweise kann das Dünnschichtelement in dem Fenster einer Banknote in Form einer vor- oder zurückgewölbten Zahl oder eines vor- oder zurückgewölbten Symbols erscheinen.

## Patentansprüche

1. Durchsichtssicherheitselement (12) für Sicherheitspapiere oder Wertdokumente, mit einem Träger (32) und einem auf dem Träger (32) aufgebrachten Dünnschichtelement (30) mit symmetrischer Dreischichtstruktur, wobei das Dünnschichtelement (30) bei der Betrachtung im Auflicht goldfarben erscheint, bei der Betrachtung im Durchlicht blau erscheint und für den Betrachter keinen Farbkippeffekt aufweist,
das Dünnschichtelement (30) zwei semitransparente Spiegelschichten (34,38) und eine zwischen den zwei Spiegelschichten (34,38) angeordnete dielektrische Abstandsschicht (36) aufweist, so dass sich bei Messung der Transmission von unpolarisiertem Licht im blauen Wellenlängenbereich von 420 bis 490 nm eine Resonanz mit einer Halbwertsbreite von 70 bis 150 nm zeigt,
wobei die beiden Spiegelschichten (34,38) jeweils aus Silber, einer Silber-Legierung, Aluminium oder einer Aluminium-Legierung, ZnS, TiO₂ oder einem Halbmetall gebildet sind.

2. Durchsichtssicherheitselement (12) nach Anspruch 1, wobei die Resonanz die einzige Resonanz im sichtbaren Bereich ist.

3. Durchsichtssicherheitselement (12) nach einem der Ansprüche 1 bis 2, wobei die beiden Spiegelschichten (34,38) aus Silber oder einer Silber-Legierung gebildet sind und die dielektrische Abstandsschicht mit einer Dicke h und einem Brechungsindex v die Relation 120 nm < h*v <170 nm erfüllt.

4. Durchsichtssicherheitselement (12) nach einem der Ansprüche 1 bis 2, wobei die beiden Spiegelschichten (34,38) aus Silber oder einer Silber-Legierung gebildet sind und die dielektrische Abstandsschicht mit einer Dicke h und einem Brechungsindex v die Relation 340 nm < h*v <400 nm erfüllt.

5. Durchsichtssicherheitselement (12) nach einem der Ansprüche 1 bis 2, wobei die beiden Spiegelschichten (34,38) aus Aluminium oder einer Aluminium-Legierung gebildet sind und die dielektrische Abstandsschicht mit einer Dicke h und einem Brechungsindex v die Relation 120 nm < h*v <190 nm erfüllt.

6. Durchsichtssicherheitselement (12) nach einem der Ansprüche 1 bis 2, wobei die beiden Spiegelschichten (34,38) aus ZnS oder TiO₂ gebildet sind und die dielektrische Abstandsschicht mit einer Dicke h und einem Brechungsindex v die Relation 100 nm < h*v <170 nm erfüllt und v kleiner als der Brechungsindex der Spiegelschicht ist.

7. Durchsichtssicherheitselement (12) nach einem der Ansprüche 1 bis 2, wobei die beiden Spiegelschichten (34,38) aus einem Halbmetall, insbesondere Silizium oder Germanium, gebildet sind, und vorzugsweise jeweils eine Dicke von 10 bis 35 nm aufweisen.

8. Durchsichtssicherheitselement (12) nach Anspruch 7, wobei die dielektrische Abstandsschicht (36) aus SiO₂ gebildet ist.

9. Durchsichtssicherheitselement (12) nach einem der vorangehenden Ansprüche, wobei das Dünnschichtelement (30) in Form von Mustern (16), Zeichen oder einer Codierung vorliegt.

10. Durchsichtssicherheitselement (12) nach einem der vorangehenden Ansprüche, wobei das Dünnschichtelement (30) mit einer Reliefstruktur kombiniert ist, insbesondere auf einer diffraktiven Reliefstruktur, einer mikrooptischen Reliefstruktur oder Sublambda-Strukturen aufgebracht ist.

11. Durchsichtssicherheitselement (12) nach einem der Ansprüche 1 bis 8, wobei das Dünnschichtelement (30) als vollflächiges Dünnschichtelement mit Aussparungen in Form von Mustern (16), Zeichen oder einer Codierung versehen ist.

12. Datenträger (10) mit einem Durchsichtssicherheitselement (12) nach einem der Ansprüche 1 bis 11, bei dem das Dünnschichtelement (30) in oder über einem transparenten Fensterbereich oder einer durchgehenden Öffnung (14) des Datenträgers (10) angeordnet ist.

13. Datenträger (10) nach Anspruch 12, wobei der Datenträger ein Wertdokument, wie eine Banknote, insbesondere eine Papierbanknote, eine Polymerbanknote, eine Folienverbundbanknote oder Ausweiskarte ist.

## Claims

1. A see-through security element (12) for security papers or value documents, with a carrier (32) and a thin-film element (30) applied to the carrier (32), said thin-film element having a symmetrical three-layer structure, wherein
the thin-film element (30) appears gold-colored upon viewing in incident light, appears blue upon viewing in transmitted light and has almost no color-shift effect for the viewer, the thin-film element (30) has two semitransparent mirror layers (34, 38) and a dielectric spacer layer (36) arranged between the two mirror layers (34, 38), so that, upon measuring the transmission of unpolarized light in the blue wavelength range from 420 nm to 490 nm, there is found a resonance with a full width at half maximum of 70 to 150 nm,
wherein the two mirror layers (34, 38) are respectively formed of silver, a silver alloy, aluminum or an aluminum alloy, ZnS, TiO₂ or a semimetal.

2. The see-through security element (12) according to claim 1, wherein the resonance is the only resonance in the visible spectrum.

3. The see-through security element (12) according to either of claims 1 to 2, wherein the two mirror layers (34, 38) are formed of silver or a silver alloy and the dielectric spacer layer with a thickness h and a refractive index v fulfills the relation 120 nm < h*v < 170 nm.

4. The see-through security element (12) according to either of claims 1 to 2, wherein the two mirror layers (34, 38) are formed of silver or a silver alloy and the dielectric spacer layer with a thickness h and a refractive index v fulfills the relation 340 nm < h*v < 400 nm.

5. The see-through security element (12) according to either of claim 1 to 2, wherein the two mirror layers (34, 38) are formed of aluminum or an aluminum alloy and the dielectric spacer layer with a thickness h and a refractive index v fulfills the relation 120 nm < h*v < 190 nm.

6. The see-through security element (12) according to either of claims 1 to 2, wherein the two mirror layers (34, 38) are formed of ZnS or TiO₂ and the dielectric spacer layer with a thickness h and a refractive index v fulfills the relation 100 nm < h*v < 170 nm and v is smaller than the refractive index of the mirror layer.

7. The see-through security element (12) according to either of claims 1 to 2, wherein the two mirror layers (34, 38) are formed of a semimetal, in particular silicon or germanium, and preferably respectively have a thickness of 10 to 35 nm.

8. The see-through security element (12) according to claim 7, wherein the dielectric spacer layer (36) is formed of SiO₂.

9. The see-through security element (12) according to any of the preceding claims, wherein the thin-film element (30) is present in the form of patterns (16), characters or a coding.

10. The see-through security element (12) according to any of the preceding claims, wherein the thin-film element (30) is combined with a relief structure, in particular is applied to a diffractive relief structure, a micro-optic relief structure or sublambda structures.

11. The see-through security element (12) according to any of claims 1 to 8, wherein the thin-film element (30) as a full-area thin-film element is supplied with recesses in the form of patterns (16), characters or a coding.

12. A data carrier (10) with a see-through security element (12) according to any of claims 1 to 11, in which the thin-film element (30) is arranged in or above a transparent window region or a through opening (14) of the data carrier (10).

13. The data carrier (10) according to claim 12, wherein the data carrier is a value document, such as a banknote, in particular a paper banknote, a polymer banknote, a foil composite banknote or an identification card.

## Revendications

1. Élément de sécurité à travers lequel on peut voir (12) pour papiers de sécurité ou documents de valeur, comportant un support (32) et un élément en couche mince (30) à structure tricouche symétrique appliqué sur le support (32), cependant que l'élément en couche mince (30) apparaît doré lors d'une observation en lumière incidente, et apparaît bleu lors d'une observation en lumière transmise et, pour l'observateur, ne présente pas d'effet de changement des couleurs par basculement,
l'élément en couche mince (30) comporte deux couches miroirs (34,38) semi-transparentes et une couche d'espacement (36) diélectrique agencée entre les deux couches miroirs (34,38), de telle sorte que, lors d'une mesure de la transmission de lumière non polarisée dans le domaine du bleu des longueurs d'onde compris entre 420 et 490 nm, on constate une résonance d'une demi-largeur comprise entre 70 et 150 nm,
cependant que les deux couches miroirs (34,38) sont respectivement constituées d'argent, d'un alliage d'argent, d'aluminium ou d'un alliage d'aluminium, de ZnS, de TiO₂ ou d'un semi-métal.

2. Élément de sécurité à travers lequel on peut voir (12) selon la revendication 1, cependant que la résonance est la seule résonance dans le domaine visible.

3. Élément de sécurité à travers lequel on peut voir (12) selon une des revendications de 1 à 2, cependant que les deux couches miroirs (34,38) sont constituées d'argent ou d'un alliage d'argent, et que la couche d'espacement diélectrique, ayant une épaisseur h et un indice de réfraction v, satisfait à la relation 120 nm < h*v <170 nm.

4. Élément de sécurité à travers lequel on peut voir (12) selon une des revendications de 1 à 2, cependant que les deux couches miroirs (34,38) sont constituées d'argent ou d'un alliage d'argent, et que la couche d'espacement diélectrique, ayant une épaisseur h et un indice de réfraction v, satisfait à la relation 340 nm < h*v <400 nm.

5. Élément de sécurité à travers lequel on peut voir (12) selon une des revendications de 1 à 2, cependant que les deux couches miroirs (34,38) sont constituées d'aluminium ou d'un alliage d'aluminium, et que la couche d'espacement diélectrique, ayant une épaisseur h et un indice de réfraction v, satisfait à la relation 120 nm < h*v <190 nm.

6. Élément de sécurité à travers lequel on peut voir (12) selon une des revendications de 1 à 2, cependant que les deux couches miroirs (34,38) sont constituées de ZnS ou de TiO₂, et que la couche d'espacement diélectrique, ayant une épaisseur h et un indice de réfraction v, satisfait à la relation 100 nm < h*v <170 nm et que v est inférieur à l'indice de réfraction de la couche miroir.

7. Élément de sécurité à travers lequel on peut voir (12) selon une des revendications de 1 à 2, cependant que les deux couches miroirs (34,38) sont constituées d'un semi-métal, en particulier de silicium ou de germanium, et ont de préférence respectivement une épaisseur de 10 à 35 nm.

8. Élément de sécurité à travers lequel on peut voir (12) selon la revendication 7, cependant que la couche d'espacement diélectrique (36) est constituée de SiO₂.

9. Élément de sécurité à travers lequel on peut voir (12) selon une des revendications précédentes, cependant que l'élément en couche mince (30) se trouve sous forme de motifs (16), de caractères ou d'une codification.

10. Élément de sécurité à travers lequel on peut voir (12) selon une des revendications précédentes, cependant que l'élément en couche mince (30) est combiné à une structure en relief, en particulier appliqué sur une structure en relief diffractive, sur une structure en relief micro-optique ou sur des structures sub-lambda.

11. Élément de sécurité à travers lequel on peut voir (12) selon une des revendications de 1 à 8, cependant que l'élément en couche mince (30) est, en tant d'élément en couche mince à pleine surface, pourvu d'évidements sous forme de motifs (16), de caractères ou d'une codification.

12. Support de données (10) doté d'un élément de sécurité à travers lequel on peut voir (12) selon une des revendications de 1 à 11, dans lequel l'élément en couche mince (30) est agencé dans et/ou par-dessus une zone fenêtre transparente ou une ouverture (14) en continu du support de données (10).

13. Support de données (10) selon la revendication 12, cependant que le support de données est un document de valeur, tel qu'un billet de banque, en particulier un billet de banque en papier, un billet de banque polymère, un billet de banque en feuille composite ou une carte d'identification.
